# EUROPEAN PATENT SPECIFICATION

(11) **EP 2 731 808 B1**
(45) Date of publication and mention of the grant of the patent: **17.06.2015**
(21) Application number: 12733720.2
(22) Date of filing: 11.07.2012
(51) Int. Cl.: B60C 9/18, B60C 9/20, B60C 9/22

(54) **TYRE FOR LIGHT VEHICLE**
REIFEN FÜR LEICHTES FAHRZEUG
PNEUMATIQUE POUR VÉHICULE LÉGER

(30) Priority: 12.07.2011 FR 1156332; 06.10.2011 US 201161544089 P
(43) Date of publication of application: 21.05.2014
(73) Proprietor: Compagnie Générale des Etablissements Michelin, 63000 Clermont-Ferrand (FR); Michelin Recherche et Technique S.A., 1763 Granges-Paccot (CH)
(72) Inventor: FLAMENT, Julien, F-63040 Clermont-Ferrand Cedex 9 (FR)
(74) Representative: Sidhu, Alban
(86) International application number: PCT/EP2012/063531
(87) International publication number: WO 2013/007737

(56) References cited:
- WO-A1-2010/115860
- US-A1- 2010 252 163

## Description

### FIELD OF THE INVENTION

The present invention relates to tyres and, more particularly, to tyres designed to be fitted to light vehicles with low energy consumption.

### BACKGROUND

Most tyres for passenger vehicles comprise a textile carcass reinforcement the reinforcing elements of which are oriented radially, as well as two crown reinforcements. Each of the crown reinforcements comprises reinforcing elements (metal cords) oriented at an angle of about 22° with respect to the circumferential direction. Sometimes, the crown reinforcements are surmounted by a hooping reinforcement formed of reinforcing elements that are oriented substantially circumferentially.

For fitting to low energy consumption vehicles such as, for example, the so-called "Urban Concept" vehicles taking part in the Shell Eco-Marathon or the solar-powered vehicles taking part in the World Solar Challenge organized in Australia, tyre designers have generally opted for simplified and lighter-weight designs. They have notably used tyres comprising a single radial carcass reinforcement, surmounted by a crown reinforcement made up of two crossed plies. Each of these plies is reinforced with threadlike metal reinforcing elements which are parallel within each ply and crossed from one ply to the other, making an angle of ± 22° with the circumferential direction.

While these tyres have actually made it possible to obtain very low rolling resistance, their cornering stiffness is unsatisfactory under certain driving conditions, and their resistance to damage (puncturing, knocks, also known as *road hazards*) is sometimes insufficient.

Document WO 2010/115860 discloses a pneumatic tyre showing the features of the preamble of claim 1.

### SUMMARY OF THE INVENTION

One of the objectives of the present invention is to obtain tyres designed to be fitted to low energy consumption vehicles that have excellent rolling resistance while at the same time making it possible to obtain a cornering stiffness suited to these vehicles.

This objective is achieved using a tyre designed to be fitted to a light vehicle, comprising:
two beads designed to come into contact with a mounting rim, each bead comprising at least one annular reinforcing structure;
two side walls extending the beads radially outwards, the two side walls meeting in a crown;
at least one carcass reinforcement anchored in the beads and extending from the beads, through the side walls as far as the crown, the carcass reinforcement comprising a plurality of carcass reinforcing elements, these carcass reinforcing elements being textile and oriented radially;
a crown reinforcement consisting of a fabric of textile reinforcing elements, wherein the fabric is obtained by interlacing, in the same plane, reinforcing elements, that are laid in a first direction and reinforcing elements, that are laid in a second direction perpendicular to the first direction, the fabric being arranged in the tyre in such a way that the first direction makes an angle greater than or equal to 40° and less than or equal to 50° with the circumferential direction and that the second direction makes an angle greater than or equal to -50° and less than or equal to -40° with the circumferential direction, which reinforcement is surmounted by a tread;
the crown further comprising a textile hooping reinforcement, the hooping reinforcement being formed of reinforcing elements that are oriented circumferentially.

According to a first preferred embodiment, a tyre according to the invention comprises a single carcass reinforcement, in order to reduce its weight.

According to a second preferred embodiment, the fabric of textile reinforcing elements is made of nylon, because such a fabric, which can undergo a great deal of elongation before breaking, is more resistant to *road hazards*.

According to a third preferred embodiment, the hooping reinforcement is made of aramid. This is because this textile is stiff enough for well withstanding tension in the crown region.

According to a fourth preferred embodiment, the tyre has no "inner liner", i.e. a butyl-based rubber layer, impermeable to the inflating gas, coating the interior surface of the tyre, as this makes the tyre lighter. As a matter of fact, the usual rubber compounds used in the manufacture of the tyres are sufficiently impermeable to the inflation gases to allow the tyre to be used in trials of the Shell Eco-Marathon or World Solar Challenge type without the need for very frequent re-inflation.

According to a fifth preferred embodiment, the tread comprises a tread pattern and the radial height of the tread pattern in the new condition is less than or equal to 5 mm, and preferably less than or equal to 2 mm. Such heights of tread pattern contribute to reducing the rolling resistance.

Of course, it may be advantageous to combine several or even all of the preferred embodiments.

### BRIEF DESCRIPTION OF THE DRAWINGS

Figure 1 depicts the outer appearance of a tyre.
Figure 2 depicts a partial perspective sectional view of a tyre typically used on passenger vehicles.
Figure 3 depicts, in radial section, a portion of a reference tyre suitable for use on low energy consumption passenger vehicles.
Figure 4 depicts, in radial section, a portion of a tyre according to the invention.
Figure 5 depicts a detail of Figure 3.
Figure 6 depicts a detail of Figure 4.

### DETAILED DESCRIPTION OF THE INVENTION

In the use of the word "radial" it is appropriate to make a distinction between the various different uses that the person skilled in the art makes of that word. First, the expression refers to a radius of the tyre. It is in this sense of the word that a point P1 is said to be "radially inside" a point P2 (or "radially on the inside of" point P2) if it is closer to the axis of rotation of the tyre than is point P2. Conversely, a point P3 is said to be "radially outside" a point P4 (or "radially on the outside of" point P4) if it is further away from the axis of rotation of the tyre than is point P4. Progress is said to be being made "radially inwards (or outwards)" when it is being made in the direction of smaller (or larger) radii. Where radial distances are concerned, it is this sense of the word that also applies.

By contrast, a thread or reinforcement is said to be "radial" when the thread or the reinforcement elements of the reinforcement make an angle greater than or equal to 80° and less than or equal to 90° with the circumferential direction. Let us specify that, in this document, the term "thread" is to be understood in a very general sense and comprises threads in the form of monofilaments, multifilaments, cords, yarns or an equivalent assembly, and irrespective of the material of which the thread is made or of the surface treatment which it has undergone in order to enhance its bonding to the rubber.

Finally, a "radial section" or "radial cross section" here means a section or cross section on a plane containing the axis of rotation of the tyre.

An "axial" direction is a direction parallel to the axis of rotation of the tyre. A point P5 is said to be "axially inside" a point P6 (or "axially on the inside of" point P6) if it is closer to the mid plane of the tyre than is point P6. Conversely, a point P7 is said to be "axially outside" a point P8 (or "axially on the outside of" point P8) if it is further from the mid plane of the tyre than is point P8. The "mid plane" of the tyre is the plane perpendicular to the axis of rotation of the tyre and situated equidistant between the annular reinforcing structures of each bead.

A "circumferential" direction is a direction which is perpendicular both to the radius of the tyre and to the axial direction.

Within the context of this document, the expression "rubber composition" denotes a rubber composition containing at least one elastomer and one filler.

A "tyre designed to be fitted to a light vehicle" here means a tyre capable of bearing a load of the order of 100 kg but not exceeding 200 kg and the mass of which tyre is less than or equal to 5 kg and preferably less than or equal to 2 kg.

When it is said of a fabric that its reinforcing elements are "oriented at ± 45° with respect to the circumferential direction", that means that the fabric is obtained by interlacing, in the same plane, threads that are laid in a first direction and threads that are laid in a second direction perpendicular to the first direction, the fabric being arranged in the tyre in such a way that the first direction makes an angle greater than or equal to 40° and less than or equal to 50° with the circumferential direction and that the second direction makes an angle greater than or equal to -50° and less than or equal to -40° with the circumferential direction.

As used in this document, "textile" refers to one or more fibres or portions of fibres that are suitable for being arranged relative to other fibres or other parts of the same fibre to form a fabric, and includes natural and synthetic fibres, in particular, polymeric fibres such as nylons, polyesters, and the like, as well as inorganic fibres, such as carbon fibre and the like.

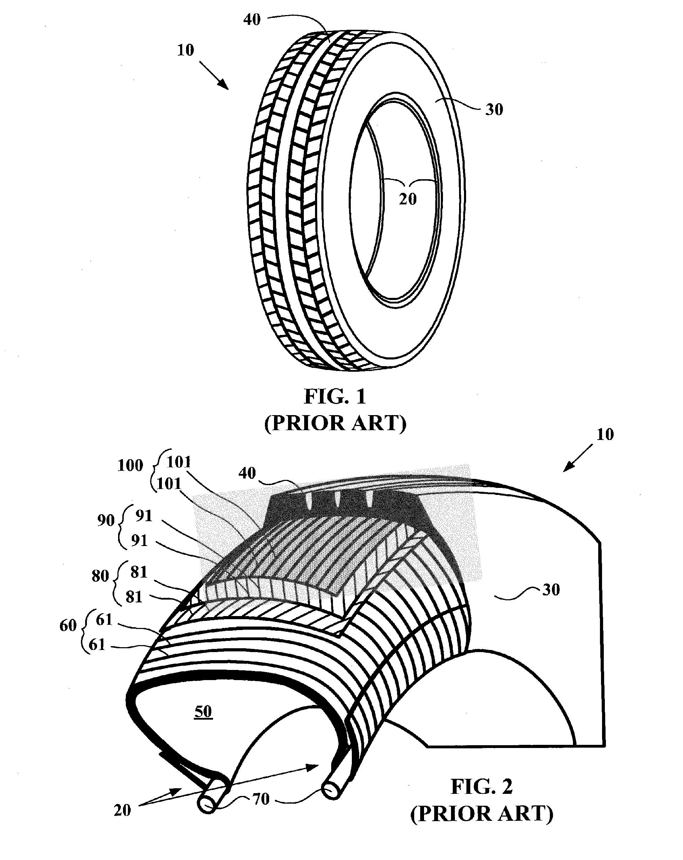

Figure 1 schematically depicts the outer appearance of a tyre 10. The tyre 10 comprises a crown comprising a crown reinforcement (not visible in Figure 1) surmounted by a tread 40, two side walls 30 extending the crown radially inwards, and two beads 20 radially on the inside of the side walls 30.

Figure 2 schematically depicts a partial perspective sectional view of a tyre 10 typically used on passenger vehicles, as described above and illustrates the various component parts of the tyre. The tyre 10 comprises a carcass reinforcement 60 made up of threads 61 coated with rubber compound, and two beads 20 each comprising annular reinforcing structures 70 which hold the tyre 10 on the rim (not depicted). The carcass reinforcement 60 is anchored in each of the beads 20. The tyre 10 further comprises a crown reinforcement comprising two plies 80 and 90. Each of the plies 80 and 90 is reinforced by threadlike reinforcing elements 81 and 91 which are parallel within each layer and crossed from one layer to the other, making angles of between 10° and 70° with the circumferential direction. The tyre also comprises a hooping reinforcement 100, arranged radially on the outside of the crown reinforcement, this hooping reinforcement being made up of reinforcing elements 101 that are oriented circumferentially and wound in a spiral. A tread 40 is laid on the hooping reinforcement; it is this tread 40 which provides contact between the tyre 10 and the road. The tyre 10 depicted is a "tubeless" tyre: it comprises an "inner liner" 50 made of butyl-based rubber compound, impermeable to the inflation gas, and covering the interior surface of the tyre.

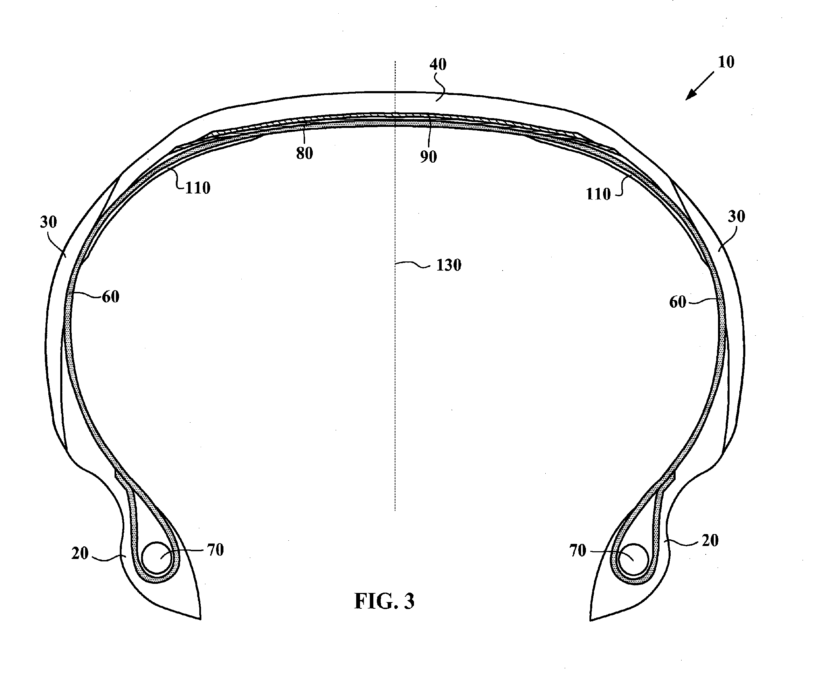

Figure 3 schematically and in radial section depicts half a reference tyre 10 suitable for use on low energy consumption vehicles, as described above. The tyre 10 comprises two beads 20 designed to come into contact with a mounting rim (not depicted), each bead 20 comprising an annular reinforcing structure, in this instance a bead wire 70. Two side walls 30 extend the beads 20 radially outwards and meet in a crown comprising a crown reinforcement formed of a first layer of reinforcing elements 80 and of a second layer of reinforcing elements 90, and radially surmounted by a tread 40. Each layer of reinforcing elements comprises threadlike reinforcing elements, coated in a matrix formed of a rubber compound. The reinforcing elements of each layer of reinforcing elements are substantially parallel to one another; the reinforcing elements of the two layers are crossed from one layer to the other at an angle of about 23° with respect to the circumferential direction, as is well known to those skilled in the art for tyres known as radial tyres.

The tyre 10 further comprises a carcass reinforcement 60 which extends from the beads 20, through the side walls 30, as far as the crown. This carcass reinforcement 60 here comprises threadlike reinforcing elements oriented substantially radially, that is to say making an angle greater than or equal to 80° and less than or equal to 90° with the circumferential direction.

The carcass reinforcement 60 comprises a plurality of carcass reinforcing elements; it is anchored in the two beads 20 by being wrapped around the bead wire 70, so as to form, in a known way, a main portion and a wrapped-around portion within each bead.

The reference 110 denotes the layers of rubber compound designed to reinforce the shoulders of the tyre. The mid plane of the tyre is indicated with the reference 130.

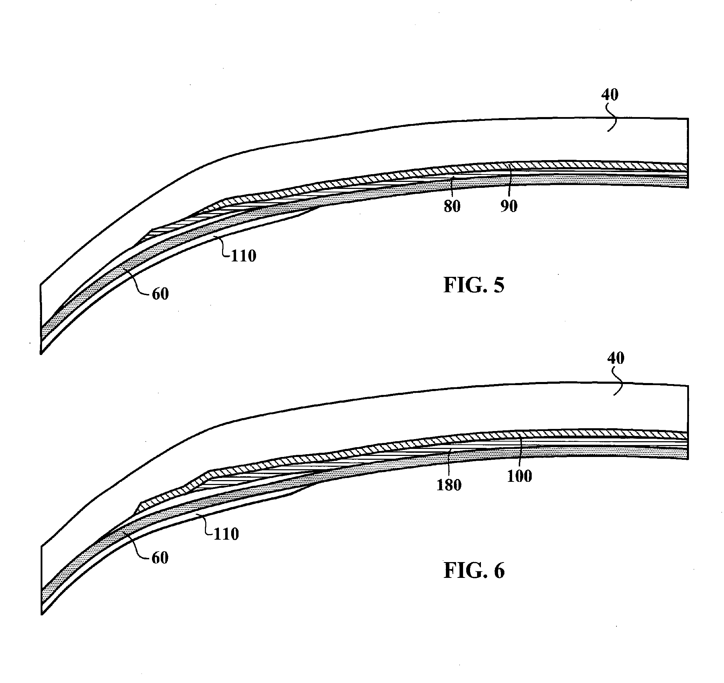

Figure 5 depicts a detail of Figure 3.

While such tyres have actually made it possible to obtain a very low rolling resistance, their corner stiffness is unsatisfactory under certain driving conditions.

One of the objectives of the present invention is to obtain tyres designed to be fitted to low energy consumption vehicles that have excellent rolling resistance while at the same time making it possible to obtain a cornering stiffness suited to these vehicles.

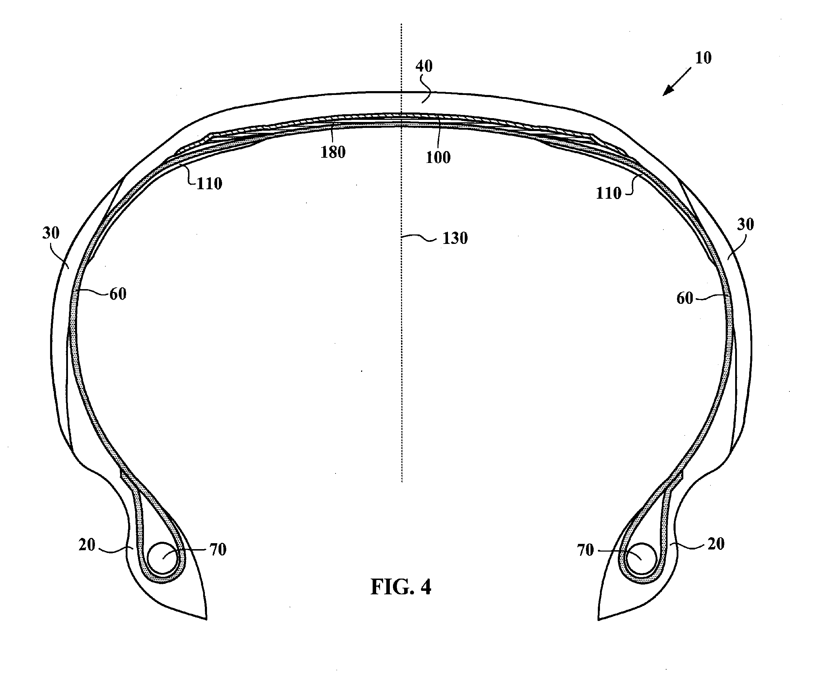

This objective, as well as others, is achieved by a tyre according to the invention, an embodiment of which is depicted in Figure 4. This tyre 10 comprises two beads 20 designed to come into contact with a mounting rim (not depicted), each bead 20 comprising at least one annular reinforcing structure, in this instance a bead wire 70. Two side walls 30 extend the beads 20 radially outwards and meet in a crown. The tyre 10 comprises a single carcass reinforcement 60 anchored in the beads 20 and extending from the beads 20 through the side walls 30 as far as the crown. The carcass reinforcement 60 comprises a plurality of textile carcass reinforcing elements which are oriented radially. The tyre 10 further comprises a crown reinforcement consisting of a fabric 180 of nylon threads, oriented at ± 45° with respect to the circumferential direction. In a particular embodiment, a suitable fabric has been found to be a fabric marketed by Milliken under the reference 0404/136/0413.

The crown reinforcement 180 is surmounted by a hooping reinforcement 100, desirably made of aramid and formed of reinforcing elements oriented circumferentially. This is an individual thread placed at 0° with respect to the circumferential direction. It is not mandatory to use aramid, but it is advisable to use a material that has a ply rupture strength of at least 400 daN/cm, the purpose of this being to avoid the crown bursting if the tyre is inflated well beyond its service pressure.

The hooping reinforcement is surmounted by a tread 40. It will be noted that, in the illustrated embodiment, the tyre has no butyl-based rubber composition layer covering the interior surface of the tyre. It will further be noted that, in this instance, the hooping reinforcement is positioned radially on the outside of the crown reinforcement and that the hooping reinforcement extends axially beyond the crown reinforcement. These are exemplary embodiments, however, and the disclosure herein contemplates other embodiments, such as those where the hooping reinforcement is positioned radially on the inside of the crown reinforcement and/or where the crown reinforcement extends axially beyond the hooping reinforcement.

The tread comprises a tread pattern (not depicted); the radial height of the tread pattern in certain of the embodiments described herein is less than or equal to 5 mm, and preferably less than or equal to 2 mm.

In order to demonstrate the advantages obtained with a tyre according to the invention, a reference tyre with the design depicted in Figure 3, and a tyre according to the invention with the design depicted in Figure 4 were compared. Both tyres were of the size 95/80 R 16.

The following table shows the rolling resistance ("RR") values obtained. The rolling resistance is substantially unchanged, with perhaps a small advantage for the tyres according to the invention. These values were obtained using a method similar to the ISO 28580 method, using the following special conditions: load 70 daN, pressure 5 bar, speed 30 and 90 km/h.

| | Reference tyre | Tyre according to the invention |
|---|---|---|
| RR at 30 km/h | 1.07 kg/t | 1.05 kg/t |
| RR at 90 km/h | 1.41 kg/t | 1.36 kg/t |

The behaviour of the tyres was compared in subjective tests carried out on the high-speed oval circuit at the DRW Test Centre at Lalystad (the Netherlands). The evaluation program included manoeuvres in a straight line such as slalom, lane changes or avoidance manoeuvres, at speeds of between 80 and 120 km/h. The same make and model of three-wheeled vehicle were used to test each set of tyres, which were mounted on the vehicles in sets of three identical new tyres, and experienced test drivers were used for each vehicle. The test was conducted in a "blind" fashion, in that the test drivers gave their impressions with regard to linearity, gain, lag, etc., without knowing the design of the tyre. The results of these tests revealed that the tyre according to the invention (i.e., the tyre shown in Figure 4) provided a more linear response to the manoeuvres than did the tyre according to Figure 3. In addition, the reactions of the vehicle fitted with the tyres according to Figure 4 were judged by the testers to be more gradual, and with no delay, when compared to the reactions of the vehicle fitted with the tyres of Figure 3. The testers reported a feeling of safety, even at 120 km/h, with vehicle fitted with the tyres having the structure shown in Figure 4, which was improved when compared to that of the vehicle fitted with the tyres of Figure 3. Moreover, centering is accurate at all speeds with the tyres of Figure 4.

## Claims

1. Tyre designed to be fitted to a light vehicle, comprising:
two beads (20) designed to come into contact with a mounting rim, each bead comprising at least one annular reinforcing structure (70);
two side walls (30) extending the beads radially outwards, the two side walls meeting in a crown;
at least one carcass reinforcement (60) anchored in the beads and extending from the beads, through the side walls as far as the crown, the carcass reinforcement comprising a plurality of carcass reinforcing elements (61), these carcass reinforcing elements being textile and oriented radially;
the crown further comprising a textile hooping reinforcement (100), the hooping reinforcement being formed of reinforcing elements (101) that are oriented circumferentially, **characterized by** a crown reinforcement consisting of a fabric (180) of textile reinforcing elements, wherein the fabric is obtained by interlacing, in the same plane, reinforcing elements, that are laid in a first direction and reinforcing elements, that are laid in a second direction perpendicular to the first direction, the fabric being arranged in the tyre in such a way that the first direction makes an angle greater than or equal to 40° and less than or equal to 50° with the circumferential direction and that the second direction makes an angle greater than or equal to -50° and less than or equal to -40° with the circumferential direction, which reinforcement is surmounted by a tread (40).

2. Tyre according to Claim 1, wherein the tyre comprises one single carcass reinforcement (60).

3. Tyre according to either one of Claims 1 and 2, wherein the fabric (180) of textile reinforcing elements is made of nylon.

4. Tyre according to any one of Claims 1 to 3, wherein the hooping reinforcement (100) is made of an aramid.

5. Tyre according to any one of Claims 1 to 4, wherein the tyre has no butyl-based rubber layer (50) coating the interior surface of the tyre.

6. Tyre according to any one of Claims 1 to 5, wherein the tread comprises a tread pattern and wherein the radial height of the tread pattern in a new condition is less than or equal to 5 mm, and preferably less than or equal to 2 mm.

## Patentansprüche

1. Reifen, der entworfen ist, um an einem leichten Fahrzeug angebracht zu werden, und der Folgendes umfasst:
zwei Wulste (20), die entworfen sind, um mit einer Montagefelge in Kontakt zu gelangen, wobei jeder Wulst wenigstens eine ringförmige Verstärkungsstruktur (70) aufweist;
zwei Seitenwände (30), die sich von den Wulsten radial auswärts erstrecken, wobei sich die zwei Seitenwände in einer Lauffläche treffen;
wenigstens eine Karkassenverstärkung (60), die in den Wulsten verankert ist und sich von den Wulsten durch die Seitenwände bis zu der Lauffläche erstreckt, wobei die Karkassenverstärkung mehrere Karkassenverstärkungselemente (61) aufweist, wobei diese Karkassenverstärkungselemente textil sind und radial orientiert sind;
wobei die Lauffläche ferner eine textile Umschnürungsverstärkung (100) umfasst, wobei die Umschnürungsverstärkung aus Verstärkungselementen (101) gebildet ist, die in Umfangsrichtung orientiert sind,
**gekennzeichnet durch**
eine Laufflächenverstärkung, die aus einem Gewebe (180) aus textilen Verstärkungselementen besteht, wobei das Gewebe **durch** Verflechten in derselben Ebene von Verstärkungselementen, die in einer ersten Richtung liegen, und von Verstärkungselementen, die in einer zu der ersten Richtung senkrechten zweiten Richtung liegen, erhalten wird, wobei das Gewebe in dem Reifen in der Weise angeordnet ist, dass die erste Richtung mit der Umfangsrichtung einen Winkel bildet, der größer oder gleich 40° und kleiner oder gleich 50° ist, und dass die zweite Richtung mit der Umfangsrichtung einen Winkel bildet, der größer oder gleich -50 ° und kleiner oder gleich -40° ist, wobei auf der Verstärkung ein Profil (40) angebracht ist.

2. Reifen nach Anspruch 1, wobei der Reifen eine einzige Karkassenverstärkung (60) umfasst.

3. Reifen nach einem der Ansprüche 1 und 2, wobei das Gewebe (180) aus textilen Verstärkungselementen aus Nylon hergestellt ist.

4. Reifen nach einem der Ansprüche 1 bis 3, wobei die Umschnürungsverstärkung (100) aus einem Aramid hergestellt ist.

5. Reifen nach einem der Ansprüche 1 bis 4, wobei der Reifen keine Gummischicht (50) auf Butylbasis, die die innere Oberfläche des Reifens beschichtet, besitzt.

6. Reifen nach einem der Ansprüche 1 bis 5, wobei das Profil ein Profilmuster aufweist und wobei die radiale Höhe des Profilmusters in einem neuen Zustand kleiner oder gleich 5 mm oder vorzugsweise kleiner oder gleich 2 mm ist.

## Revendications

1. Pneu conçu pour être installé dans un véhicule léger, comprenant :
deux tringles (20) conçues pour venir en contact avec une jante de montage, chaque tringle comprenant au moins une structure de renforcement annulaire (70) ;
deux parois latérales (30) prolongeant les tringles radialement vers l'extérieur, les deux parois latérales se rejoignant au niveau d'une couronne ;
au moins un renfort de carcasse (60) ancré dans les tringles et s'étendant depuis les tringles, à travers les parois latérales jusqu'à la couronne,
le renfort de carcasse comprenant une pluralité d'éléments de renfort de carcasse (61), ces éléments de renfort de carcasse étant textiles et étant orientés radialement ;
la couronne comprenant en outre un renfort de frette textile (100), le renfort de frette étant formé d'éléments de renfort (101) qui sont orientés circonférentiellement,
**caractérisé par**
un renfort de couronne constitué d'un tissu (180) d'éléments de renfort textiles, le tissu étant obtenu par entrelacement, dans le même plan, d'éléments de renfort qui sont posés dans une première direction et d'éléments de renfort qui sont posés dans une deuxième direction perpendiculaire à la première direction, le tissu étant agencé dans le pneu de telle sorte que la première direction fasse un angle supérieur ou égal à 40° et inférieur ou égal à 50° avec la direction circonférentielle et que la deuxième direction fasse un angle supérieur ou égal à -50° et inférieur ou égal à -40° avec la direction circonférentielle, lequel renfort est surmonté par une tringle (40).

2. Pneu selon la revendication 1, dans lequel le pneu comprend un renfort de carcasse unique (60).

3. Pneu selon l'une quelconque des revendications 1 et 2, dans lequel le tissu (180) d'éléments de renfort textiles est fabriqué en nylon.

4. Pneu selon l'une quelconque des revendications 1 à 3, dans lequel le renfort de frette (100) est fabriqué en aramide.

5. Pneu selon l'une quelconque des revendications 1 à 4, dans lequel le pneu n'a pas de couche de caoutchouc à base de butyle (50) recouvrant la surface intérieure du pneu.

6. Pneu selon l'une quelconque des revendications 1 à 5, dans lequel la tringle comprend un motif de tringle et dans lequel la hauteur radiale du motif de tringle à l'état neuf est inférieure ou égale à 5 mm et de préférence inférieure ou égale à 2 mm.
